# EUROPÄISCHE PATENTSCHRIFT

(11) **EP 3 571 006 B1**
(45) Veröffentlichungstag und Bekanntmachung des Hinweises auf die Patenterteilung: **03.04.2024**
(21) Anmeldenummer: 18700076.5
(22) Anmeldetag: 05.01.2018
(51) Int. Cl.: B23P 9/00, B23P 9/02, C21D 7/12

(54) **VORRICHTUNG UND VERFAHREN ZUM AUTOFRETTIEREN EINES WERKSTÜCKS**
DEVICE AND METHOD FOR THE AUTOFRETTAGE OF A WORKPIECE
DISPOSITIF ET PROCÉDÉ D'AUTO-FRETTAGE D'UNE PIÈCE À USINER

(30) Priorität: 20.01.2017 DE 102017200917
(43) Veröffentlichungstag der Anmeldung: 27.11.2019
(73) Patentinhaber: Uhde High Pressure Technologies GmbH, 58093 Hagen (DE); thyssenkrupp AG, 45143 Essen (DE)
(72) Erfinder: KNAUF, Wilfried, 58313 Herdecke (DE); UHLIG, Klaus, 58099 Hagen (DE)
(74) Vertreter: thyssenkrupp Intellectual Property GmbH
(86) Internationale Anmeldenummer: PCT/EP2018/050286
(87) Internationale Veröffentlichungsnummer: WO 2018/134063

(56) Entgegenhaltungen:
- EP-A1- 1 657 007
- CN-A- 103 433 702
- DE-A1-102011 001 763
- DE-B1- 1 583 992
- DE-B3-102006 054 440
- JP-A- H04 167 944
- US-B1- 7 818 986

## Beschreibung

### TECHNISCHES GEBIET

Die Erfindung betrifft ein Werkzeug bzw. eine Werkzeugvorrichtung zur Autofrettage von Werkstücken wie etwa innendruckbelasteten Maschinenteilen, z.B. Hochdruckrohren, sowie ein Verfahren zum Autofrettieren. Insbesondere betrifft die Erfindung eine Werkzeugvorrichtung und ein Verfahren gemäß dem Oberbegriff des jeweiligen unabhängigen Anspruchs. Ferner betrifft die Erfindung die Verwendung der Werkzeugvorrichtung basierend auf wenigstens zwei Wirkungsweisen.

### HINTERGRUND

Die Autofrettage ist ein Verfahren zum Verfestigen, Vergüten oder Veredeln von Innenflächen von Werkstücken, die einem Innendruck ausgesetzt werden, z.B. Maschinenteile, Maschinenelemente, (Hoch-)Druckbehälter, Hochdruckrohrleitungen, Pumpenkörper. Die Autofrettage betrifft eine Kaltverformung mit dem Ziel, die Ermüdungsfestigkeit mittels Druckeigenspannungen zu erhöhen. Mittels Autofrettage wird versucht, ein Werkstück (z.B. Rohr, Behälter) derart umzuformen, dass Druckspannungen an einer Innenseite des Werkstücks verbleiben, also auch nach der Autofrettage vorherrschen. Ein treibendes Potential für die Höhe dieser Druckvorspannung ist die Zugspannungs-Differenz (oder Dehnungs-Differenz) zwischen Innen- und Außenbereichen des Werkstücks während der Autofrettage.

Bei der Autofrettage wird das Werkstück durch Druck von innen, also von der Innenseite ausgehend, bis über die Streckgrenze bzw. über die elastische Dehngrenze (Elastizitätsgrenze) hinaus belastet, wodurch (nach Entlastung) eine DruckVorspannung im Material bzw. Werkstoffgefüge erzeugt werden kann. Man kann diesen Vorgang auch als "Plastifizieren" des Innenwand-Materials beschreiben. Weiter außen liegende Bereiche hingegen werden nur elastisch verformt. Hieraus resultieren im wieder entlasteten Zustand Druckeigenspannungen speziell an der Innenwand, insbesondere da weiter außen liegende Bereiche nur elastisch verformt wurden und wieder in die ursprüngliche Geometrie zurückdrücken wollen. Dadurch kann eine Betriebslast-Amplitude (maximale Dauerbeanspruchung) in einen unkritischeren, höheren Druckbereich verschoben werden. Denn ein Referenz- Innendruck erzeugt nach erfolgter Autofrettage nur noch eine kleinere Dehnung der (nach innen vorgespannten) Werkstück-Innenwand. Auch kann einer von der Innenfläche des Werkstücks ausgehenden Rissausbreitung entgegengewirkt werden. Die Werkstücke werden dadurch also robuster, betriebssicherer. Anders ausgedrückt: Mit dem gleichen Werkstoff bzw. Material können höhere Belastungen aufgenommen werden. Der Druckaufbau erfolgt dabei üblicherweise nur einige Sekunden, also nur während einer kurzen Haltedauer.

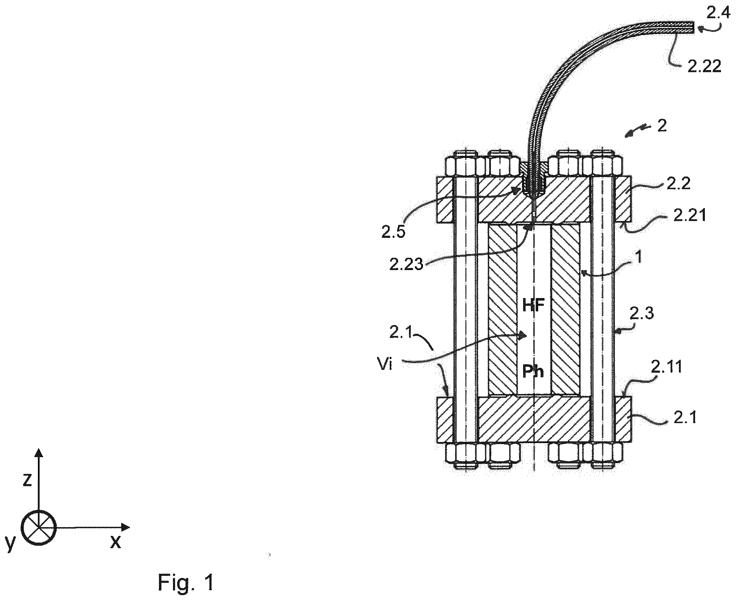

Es wird zwischen hydraulischer und mechanischer Autofrettage unterschieden. Bei der hydraulischen Autofrettage wird das Werkstück von innen mit einem Hochdruckfluid auf Drücke weit über dem Betriebsdruck beaufschlagt, insbesondere während einer Dauer von einigen Sekunden bis einigen Minuten. Die hydraulische Autofrettage kann vergleichsweise flexibel auf unterschiedliche Werkstück-Geometrien angewendet werden. Dabei werden Drücke im Bereich von z.B. 12.000bar oder auch 14.000 bis 15.000bar realisiert. Die hydraulische Autofrettage ist jedoch vergleichsweise aufwändig, insbesondere da für jedes Werkstück eine Hochdruck-Versorgung vorgesehen werden muss, und da in vielen Fällen eine Nachbearbeitung erforderlich ist. Auch müssen die Werkzeug-Komponenten (Pumpen-Teile, Ventile, usw.) auf die erforderlichen sehr hohen Drücke ausgelegt werden. Es müssen kurze Wartungsintervalle eingehalten werden. Die hydraulische Autofrettage wird auch im Detail weiter unten im Zusammenhang mit Fig. 1 beschrieben.

Die folgenden Veröffentlichungen beschreiben einzelne Aspekte der hydraulischen Autofrettage: DE 10 2011 001 763 A1, DE 41 15 284 A1, EP 2 298 940 B1, WO 2016/124660 A1, EP 1 384 534 B1.

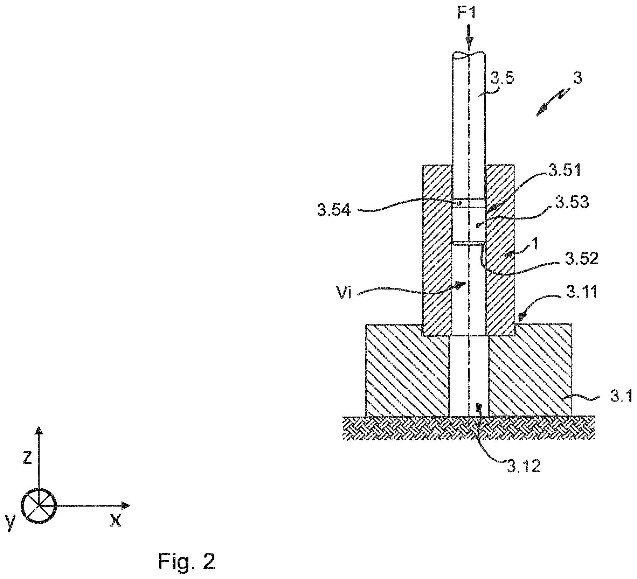

Bei der mechanischen Autofrettage wird kein Hochdruckfluid im Werkstück verwendet, sondern die Streckung bzw. Dehnung des Werkstücks wird durch einen Stempel oder Dorn mit Übermaß erzeugt, welcher durch das Werkstück getrieben bzw. gedrückt wird. Als Vorteile der mechanischen Autofrettage können genannt werden: Glättung von Innenflächen, Erzeugung einer formgenauen Innengeometrie, Entbehrlichkeit von Nachbehandlungen, Erzeugen eines höheren Grades an Verformungen bzw. Plastifizierungen als bei der hydraulischen Autofrettage, oder auch tiefergehende Druckeigenspannungen. Der mittels mechanischer Autofrettage mögliche Effekt oder die Belastung des Werkstücks kann bis zum theoretischen Optimum gesteigert werden, was als Dehnung bis hin zur "Durchplastifizierung" beschrieben werden kann. Nachteilig hingegen sind in vielen Fällen Riefenbildung (insbesondere aufgrund hoher durch den Stempel hervorgerufener Reib- bzw. Oberflächenkräfte) oder das Erfordernis von Schmierstoffen oder speziellen Materialpaarungen, um eben diese Riefenbildung verhindern zu können, oder das Erfordernis von Nachbearbeitungen. Auch können recht kurzfristig Verschleißerscheinungen am Werkzeug auftreten. Die mechanische Autofrettage wird auch im Detail weiter unten im Zusammenhang mit Fig. 2 beschrieben.

Aus der CN 103433702 A ist beispielsweise ein Herstellungsverfahren für einen Ultrahochdruck-Zylinderkörper einer hydraulischen Quetschtestausrüstung bekannt geworden. Das Herstellungsverfahren für den Ultrahochdruck-Zylinderkörper der hydraulischen Quetschtestausrüstung zeichnet sich beispielsweise dadurch aus, dass ein Rohr mechanisch autofrettiert wird und danach mit zwei anderen Rohren und verbunden wird. Das erzeugte mehrwandige Rohr wird hydraulisch autofrettiert.

Aus der US 7,818,986 B1 ist beispielsweise ein Herstellungsverfahren bekannt geworden, umfassend einen ersten Schritt der Durchführung einer Autofrettage eines Gegenstandes, einen zweiten Schritt des Wärmeeinweichens des Gegenstandes und einen dritten Schritt der Durchführung einer hydraulischen Autofrettage an dem Gegenstand. Der Gegenstand kann zum Beispiel ein Druckbehälter oder ein Waffenrohr sein.

Aus der DE 10 2006 054 440 B3 ist beispielsweise ein Verfahren zum hydraulischen Autofrettieren und eine Autofrettage-Werkzeugvorrichtung zum Autofrettieren eines Werkstücks bekannt geworden, umfassend eine erste Fixierung und eine zweite Fixierung, zwischen welchen ein Innenvolumen des Werkstücks anordenbar ist, in welches Innenvolumen ein Hochdruckfluid einbringbar ist.

Aus der DE 10 2011 001 763 A1 ist ferner beispielsweise eine Steuerungseinrichtung mit einer Logikeinheit eingerichtet zum Steuern eines hydraulischen Autofrettageverfahrens und/oder einer hydraulischen Autofrettage-Werkzeugvorrichtung bekannt geworden.

Aus der EP 1 657 007 A1 ist eine Umformvorrichtung zur Herstellung von Werkstücken, die beispielsweise eine komplexe geometrische Form haben, mittels Innenhochdruckumformung bekannt geworden. Insbesondere lassen sich mit einer solchen erfindungsgemäßen Umformvorrichtung Hohlkörper wie beispielsweise Rohre in komplexere Konturen verformen bzw. aufweiten. Außerdem ist in der EP 1 657 007 A1 ein Verfahren zum Verformen von Werkstücken, mit dem allgemeine Hohlkörper wie beispielsweise Rohre durch Aufbringen eines Innendruckes aufgeweitet bzw. in eine gewünschte Kontur verformt werden können, beschrieben. EP 1 657 007 A1 offenbart die Merkmale der Oberbegriffe der Ansprüche 1 und 7.

### BESCHREIBUNG DER ERFINDUNG

Aufgabe der Erfindung ist es, eine Vorrichtung oder ein Verfahren mit den eingangs beschrieben Merkmalen zur Verfügung zu stellen, womit die Autofrettage auf möglichst einfache, flexible Weise durchgeführt werden kann. Auch ist es Aufgabe der Erfindung, eine Vorrichtung oder ein Verfahren zur Autofrettage bereitzustellen, womit ein hochfestes Werkstück in einem engen Toleranzbereich, also mit hoher Genauigkeit, hergestellt werden kann. Nicht zuletzt ist es Aufgabe, mittels einer Vorrichtung und einem Verfahren zur Autofrettage etwaigen Aufwand durch Nachbearbeitungen des Werkstücks möglichst gering halten zu können.

Zumindest eine der zuvor beschriebenen Aufgaben wird erfindungsgemäß gelöst durch ein Verfahren gemäß Anspruch 1 und eine Vorrichtung gemäß Anspruch 7.

Die Kombination von hydraulischer und mechanischer Autofrettage liefert zahlreiche Vorteile, sei es hinsichtlich Festigkeit des Werkstücks, sei es hinsichtlich des Anwendungsbereiches des Verfahrens. Der Fluiddruck kann mittels des Stempels aufrechterhalten und dadurch das Werkstück vorgedehnt werden.

Es hat sich gezeigt, dass die erfindungsgemäße hydromechanische Autofrettage insbesondere in einem Druckbereich von 4.000 bis 20.000 bar anwendbar ist. Als Hochdruckfluide können z.B. HFC-Fluide eingesetzt werden (Wasserglykole mit einem Wassergehalt über 35 % und Polyglykol-Lösung).

Der Vorschub des Stempels kann insbesondere mittels eines Hydraulikantriebes erfolgen bzw. gesteuert werden.

Die Fixierung kann z.B. in der Art eines (Schraub-)Flansches ausgebildet sein. Ein Flansch gemäß der vorliegenden Offenbarung ist als ein Maschinenelement zur Halterung und Fixierung und wahlweise auch Abdichtung wenigstens einer Seite/Fläche des Werkstücks zu verstehen. Im Folgenden werden die Begriffe Flansch und Fixierung synonym verwendet. Die Fixierung kann durch einen Flansch gebildet sein oder einen Flansch umfassen. Die erste Fixierung kann daher auch als einführseitige Fixierung oder einführseitiger Flansch beschrieben werden, und die zweite Fixierung kann als bodenseitige Fixierung oder bodenseitiger Flansch beschrieben werden, bei einer Abstützung auf dem Boden. Wahlweise ist auch ein Einspannen in ein Werkzeug ohne Abstützung am Boden möglich.

Gemäß einer Ausführungsform erfolgt der Vorschub des Stempels derart, dass Hochdruckfluid zwischen einem Dorn des Stempels und dem Werkstück durchgepresst wird und entlang des Stempels in Richtung zur ersten Fixierung bzw. zum ersten Flansch abfließt. Hierdurch kann auch eine Schmierung erfolgen, und die mechanische Wirkung auf das Werkstück ist weniger nachteilig als bei rein mechanischer Autofrettage. Eine Schmierung zwischen Dorn und Werkstück kann dabei insbesondere auf die schmierende Wirkung kleinster Fluideinschlüsse in der Oberflächenstruktur des Werkstücks reduziert werden, mit der Folge, dass mittelbar über die Vorschubgeschwindigkeit und den Abfluss des Hochdruckfluides der Innendruck eingestellt werden kann. Es hat sich gezeigt, dass hierdurch ein sehr einfach steuerbares, betriebssicheres und exakt durchführbares, reproduzierbares Verfahren vorgegeben werden kann. Der Druck im Innenvolumen kann insbesondere mittels des Stempels vorgegeben werden, wobei die Druckhöhe auch weitgehend unabhängig von der Vorschubgeschwindigkeit vorgegeben werden kann. Demgemäß ist diese Art und Weise des Vorschubs nicht zu verstehen als dynamische Autofrettage in der Art wie z.B. in DE 10 2011 001 763 A1 beschrieben.

Der Stempel weist einen Dorn mit Übermaß bezüglich des Innenmaßes des Werkstücks auf, oder ist mit dem Dorn verbunden.

Bei dynamischer Autofrettage (z.B. gemäß DE 10 2011 001 763 A1) wird der Autofrettagedruck im Wesentlichen mittels der Stempelgeschwindigkeit eingestellt. Im Gegensatz dazu kann der Vorschub erfindungsgemäß zwar zur Druckerzeugung genutzt werden. Die Druckhöhe (Betrag) kann jedoch weitgehend unabhängig von der Vorschubgeschwindigkeit definiert werden, insbesondere auch weitgehend konstant in einem Bereich von Minimal- bis Maximalgeschwindigkeit. Insbesondere wird die druckbedingte Aufweitung einzig durch ein Übermaß des Dorns bestimmt.

Gemäß einer Ausführungsform wird ein/der Dorn des Stempels bis in eine hochdruckfeste Ausnehmung im zweiten Flansch vorgeschoben, insbesondere in eine Sacklochbohrung. Hierdurch ergeben sich Variationsmöglichkeiten hinsichtlich der Art und Weise, den erhöhten Innendruck zu erzeugen. Insbesondere kann dabei die Autofrettage mit zumindest annähernd konstanter Wirkung bis zum unteren Ende des Werkstücks durchgeführt werden. Hierdurch ist es insbesondere auch möglich, entlang des gesamten Werkstücks dieselben Prozessbedingungen einzustellen.

Bevorzugt ist die Ausnehmung derart dimensioniert, dass ein Übermaßbereich eines Dorns des Stempels aufgenommen werden kann. Die Ausnehmung kann geometrisch korrespondierend zum Dorn ausgelegt und dimensioniert sein. Vorteilhafter Weise ist zwischen dem Dorn und der Ausnehmung derart viel Spiel vorhanden, dass sich die Vorrichtung mit Beendigung des Prozesses aus sich selbst heraus druckentlastet.

Gemäß einer Ausführungsform wird das Innenvolumen drucklos mit Hochdruckfluid befüllt, bevor der Stempel in das Innenvolumen vorgeschoben wird. Hierdurch ergeben sich auch Vorteile beim Rüsten des Werkzeugs, bevor die Autofrettage erfolgt. Eine Abdichtung kann auf einfache Weise sichergestellt werden.

Die Anordnung zwischen der ersten und zweiten Fixierung erfordert nicht notwendigerweise eine Dichtung an der ersten Fixierung, sondern wenn dann lediglich an der zweiten Fixierung. Nur an der zweiten Fixierung treten hohe Fluiddrücke auf, welche bei einer Abdichtung besser beherrscht und geregelt werden können, wohingegen an der ersten Fixierung das Hochdruckfluid auch z.B. abgepumpt werden kann. An der ersten Fixierung müssen auch nicht notwendigerweise hohe Lasten bzw. Druckkräfte abgefangen werden. Die erste und zweite Fixierung können daher ganz unabhängig voneinander ausgestaltet und dimensioniert werden. Die zweite Fixierung kann auch als bodenseitige Gegenhalterung bezeichnet werden.

Im oberen Flansch (Deckelflansch) liegt nicht notwendiger Weise ein hoher Druck vor, insbesondere da sowohl zwischen Stempel und Deckelflansch als auch zwischen Stempel bzw. Dorn und Werkstück ausreichend Spiel eingestellt werden kann. Hierdurch kann die Werkzeugvorrichtung einfach im Aufbau gehalten werden.

Vor dem Befüllen mit Hochdruckfluid kann das Innenvolumen auf der einen Seite an dem einen Flansch druckdicht abgedichtet werden. Eine druckdichte Abdichtung der anderen Seite (also des anderen Flansches) ist nicht notwendigerweise erforderlich, denn das Hochdruckfluid kann durch den einfahrenden Dorn unter Druck gehalten werden, so dass sich nur Im Bereich vom Dorn bis zum zweiten Flansch eine Hochdruck-Zone ausbildet. Oberhalb des Dorns (d.h. im Bereich vom Dorn bis zum ersten Flansch) kann eine drucklose Zone realisiert werden.

Gemäß einer Ausführungsform wird Hochdruck durch Vorschub des Stempels aufgebaut. Dies ermöglicht auch eine einfache Druckregelung als Funktion der Stempelposition. Wahlweise kann der Vorschub so eingestellt werden, dass eine Druckregelung selbstregulierend durch Abstrom von Hochdruckfluid vorbei an einem Dorn des Stempels erfolgt. Dies liefert ein sehr betriebssicheres Verfahren, insbesondere bei extrem hohen Drücken über 15.000bar.

Dabei kann eine druckbedingte Aufweitung im Wesentlichen durch ein Übermaß des Stempels definiert werden, insbesondere unabhängig von der Vorschubgeschwindigkeit. Dies ermöglicht z.B. eine Variation der Vorschubgeschwindigkeit ohne Druckvariation.

Bevorzugt wird der Vorschub des Stempels so eingestellt, dass eine Dehnung des Werkstücks ein Vorbeiströmen von Hochdruckfluid aus dem Innenvolumen an einem Dorn des Stempels vorbei bewirkt. Hierdurch kann ein selbstregulierender Prozess mit hoher Betriebssicherheit und geringer Fehlertoleranz bereitgestellt werden.

Gemäß einer Ausführungsform wird Hochdruckfluid in Abhängigkeit des Vorschubs des Stempels heckseitig von einem Dorn des Stempels aus dem ersten Flansch abgezogen. Hierdurch kann die Handhabung von Hochdruckfluid auf den ersten Flansch konzentriert werden. Der zweite Flansch braucht lediglich fluiddicht mit dem Werkstück verbunden sein. Eine fluiddichte Abdichtung am ersten Flansch bzw. an der ersten Fixierung kann wahlweise entfallen.

Gemäß einer Ausführungsform wird am zweiten Flansch nach dem Einführen des Stempels bzw. Dorns in das Werkstück von extern ein Fluiddruck im Innenvolumen aufgebaut, insbesondere zu Beginn des Vorschubs des Stempels. Dies kann mittels einer von extern (z.B. über eine Bohrung) an den zweiten Flansch angeschlossenen, druckerzeugenden Einrichtung (insbesondere Pumpe) erfolgen. Diese Variante des Verfahrens kann insbesondere dann Vorteile liefern, wenn eine durch etwaige Kompressibilität des Hochdruckfluides bedingte Übergangsphase bis zum Erreichen des vollen Fluiddrucks verringert werden soll.

Gemäß einer Ausführungsform wird über einen am zweiten Flansch angeschlossenen Druckbegrenzer der Fluiddruck auf einen definierten Wert unterhalb des sich aufgrund des Vorschubs des Stempels ergebenden Druckniveaus eingestellt. Hierdurch lässt sich das Verfahren auf sehr flexible Weise auf ein definierbares Verhältnis bezüglich der Wirkungsweisen mechanischer Autofrettage und hydraulischer Autofrettage einstellen. Es hat sich gezeigt, dass hierdurch die Möglichkeit geschaffen werden kann, den Autofrettagevorgang bis zur so genannten Durchplastifizierung des Werkstücks auszureizen. Dabei können beispielsweise auch Druckspitzen vermieden werden, beispielsweise falls sich unerwartet hohe Reibkräfte an der Schnittstelle zwischen Dorn und Werkstück einstellen sollten.

Gemäß einer Ausführungsform wird das zuvor beschriebene Verfahren angewandt zum Autofrettieren eines Werkstücks aus der Gruppe: Pumpenkörper insbesondere bis zu einem Verhältnis von Länge zu Bohrungsdurchmessen von 15, Fittinge oder Rohrverbinder, Dichtlinsen, Ventilsitze, rohrförmige Teile oder drucktragende Bohrungen insbesondere bis zu einem Verhältnis von Länge zu Bohrungsdurchmesser von 20.

Erfindungsgemäß wird mittels des Stempels der Fluiddruck zur hydraulischen Autofrettage erzeugt, und wobei das Werkstück mittels eines Dorns des Stempels mit Übermaß bezüglich des Innenmaßes des Werkstücks mechanisch autofrettiert wird. Das Übermaß kann die Aufweitung definieren.

Zumindest eine der zuvor beschriebenen Aufgaben wird erfindungsgemäß auch gelöst durch ein Verfahren zum Autofrettieren eines Werkstücks, wobei das Werkstück zwischen einem ersten Flansch und einem zweiten Flansch angeordnet wird, wobei ein zwischen den Flanschen gebildetes Innenvolumen des Werkstücks mit Hochdruckfluid beaufschlagt wird, wobei durch einen Durchlass im ersten Flansch ein Stempel in das Innenvolumen getrieben wird, und wobei durch Vorschub des Stempels mittels des Stempels einerseits ein Fluiddruck im Innenvolumen erzeugt wird und andererseits das Werkstück mechanisch autofrettiert wird, wobei der Vorschub des Stempels derart erfolgt, dass Hochdruckfluid zwischen einem Dorn des Stempels und dem Werkstück durchgepresst wird und entlang des Stempels in Richtung zum ersten Flansch abfließt, wobei der Vorschub des Stempels derart eingestellt wird, dass eine Dehnung des Werkstücks ein Vorbeiströmen von Hochdruckfluid aus dem Innenvolumen am Dorn des Stempels vorbei bewirkt. Hierdurch können zuvor beschriebene Vorteile realisiert werden.

Bereitgestellt wird ferner eine Autofrettage-Werkzeugvorrichtung zum Autofrettieren eines Werkstücks, umfassend einen ersten Flansch bzw. eine erste Fixierung und einen zweiten Flansch bzw. eine zweite Fixierung, zwischen welchen ein Innenvolumen des Werkstücks anordenbar ist, insbesondere fluiddicht zumindest seitens des zweiten Flansches, in welches Innenvolumen ein Hochdruckfluid einbringbar ist.

Zumindest eine der zuvor beschriebenen Aufgaben wird erfindungsgemäß dadurch gelöst, dass die Autofrettage-Werkzeugvorrichtung einen Stempel eingerichtet für mechanisches Autofrettieren des Werkstücks umfasst, wobei die erste Fixierung einen Durchlass für den Stempel aufweist, wobei die Autofrettage-Werkzeugvorrichtung mittels des Hochdruckfluides und des Stempels zum hydromechanischen Autofrettieren des Werkstücks eingerichtet ist. Bei dieser Anordnung und Führung des Stempels ergeben sich zahlreiche Vorteile, sei es hinsichtlich Anwendungsbereich des Verfahrens, sei es hinsichtlich einfachem, robustem Aufbau der Werkzeugvorrichtung.

Das Werkstück kann mittels einer hochdrucktechnisch zugelassenen Flanschverschraubung oder gleichwertigen Spannmitteln zwischen den Flanschen verspannt werden. Dabei kann auch Dichtigkeit sichergestellt werden.

Gemäß einem Ausführungsbeispiel ist der Durchlass fluchtend, insbesondere koaxial zu einer Längsachse des Werkstücks angeordnet. Hierdurch kann der Stempel linear geführt werden, insbesondere unidirektional, was das Verfahren oder die Vorrichtung vereinfacht.

Gemäß einem Ausführungsbeispiel weist der zweite Flansch eine Ausnehmung auf, die fluchtend, insbesondere koaxial zu einer Längsachse des Werkstücks angeordnet ist. Hierdurch kann der Stempel linear geführt werden, insbesondere unidirektional, was das Verfahren oder die Vorrichtung vereinfacht. Die Ausnehmung kann derart angeordnet und dimensioniert sein, dass die Ausnehmung eingerichtet ist zur Aufnahme eines freien Endes des Stempels. Der zweite Flansch kann dabei derart angeordnet und dimensioniert sein, dass der zweite Flansch eingerichtet ist zur Aufnahme und Weiterleitung von Stempelkräften während der Autofrettage.

Gemäß einem Ausführungsbeispiel ist ein/der Dorn des Stempels demontierbar am Stempel befestigt oder ohne besondere Befestigung dem Stempel stirnseitig vorgelagert. Dies liefert diverse Vorteile, sei es bezüglich spezifisch auswählbarer Materialpaarungen, sei es bezüglich der Demontage des Werkstückes nach erfolgter Autofrettage.

Gemäß einem Ausführungsbeispiel ist die Ausnehmung des zweiten Flansches als hochdruckfeste Ausnehmung für Hochdruckfluid oder für einen Dorn des Stempels ausgebildet. Hierdurch ergeben sich Vorteile hinsichtlich der Verfahrensführung (insbesondere Homogenisieren von Druckschwankungen), und auch hinsichtlich der Werkstücke, die mittels des Verfahrens verfestigt werden können. Insbesondere kann der Stempel komplett entlang der Innenfläche des jeweiligen Werkstücks verlagert werden.

Eine Absicherung hinsichtlich Sicherheits-Vorschriften kann über die Flanschverschraubungen erfolgen, oder auch mittels druck-begrenzender zusätzlicher Vorrichtungen, beispielsweise mittels eines Druckbegrenzungsventils oder einer Berstscheiben-Einheit.

Gemäß einem Ausführungsbeispiel weist ein/der Dorn des Stempels eine bugseitige Fase und eine heckseitige Fase auf, zwischen welchen Fasen eine zylindrische oder konisch zum Heck breiter werdende Mantelfläche ausgebildet ist. Hierdurch kann der Dorn spezifisch ausgelegt werden, insbesondere spezifisch für ein jeweiliges Werkstück oder Werkstückmaterial. Insbesondere können einzelne Flächenabschnitte des Dorns mit unterschiedlichen Oberflächeneigenschaften oder -geometrien bereitgestellt werden.

Der Dorn weist bevorzugt eine hohe Härte und hohe Oberflächengüte auf. Der Dorn kann einer speziellen Oberflächenbehandlung unterzogen sein, oder eine spezielle Beschichtung aufweisen. Dadurch kann eine Neigung zu Kaltverschweißen/Fressen vermindert werden.

Dorn und Stempel sind bevorzugt zwei unterschiedliche Teile. Dies ermöglicht eine spezifische Auslegung des Dorns, insbesondere in Hinblick auf bestimmte Materialpaarungen oder Werkstück-Größen, ohne den Stempel wechseln zu müssen. Dorn und Stempel können alternativ auch einstückig zu einem Bauteil zusammengefasst sein.

Gemäß einem Ausführungsbeispiel ist der zweite Flansch massiv. Dies liefert eine hohe Festigkeit und ermöglicht das Aufnehmen und Weiterleiten von Kräften mittels des zweiten Flansches. Der zweite Flansch kann gleichzeitig als Sockel für die gesamte Werkzeugvorrichtung dienen.

Gemäß einem Ausführungsbeispiel weist der zweite Flansch eine Unterseite eingerichtet zur Ablage der Werkzeugvorrichtung und zum Übertragen von Stempelkräften auf. Hierdurch lässt sich die Werkzeugvorrichtung, bei einfachem konstruktivem Aufbau, auf einfache Weise lagern und abstützen.

Gemäß einem Ausführungsbeispiel ist im ersten Flansch ein geometrisch zum Stempel ausgebildetes Zwischenelement angeordnet. Dem Werkstück kann ein Zwischenelement, insbesondere eine Passhülse vorgelagert sein, durch welches der Dorn zuerst durchgetrieben wird. Hierdurch kann eine durch Kompressibilität des hochdruckfluides bedingte Übergangsphase bis zum Erreichen des vollen Fluiddrucks weitgehend überbrückt werden, bis der Dorn das Werkstück erreicht.

Zumindest eine der zuvor beschriebenen Aufgaben wird erfindungsgemäß auch gelöst durch eine Autofrettage-Werkzeugvorrichtung zum Autofrettieren eines Werkstücks, umfassend einen ersten Flansch und einen zweiten Flansch, zwischen welchen ein Innenvolumen des Werkstücks anordenbar ist, insbesondere fluiddicht zumindest an einem der Flansche, in welches Innenvolumen ein Hochdruckfluid einbringbar ist, wobei die Autofrettage-Werkzeugvorrichtung einen Stempel eingerichtet für mechanisches Autofrettieren des Werkstücks umfasst, wobei der erste Flansch einen Durchlass für den Stempel aufweist, wobei die Autofrettage-Werkzeugvorrichtung mittels des Hochdruckfluides und des Stempels zum hydromechanischen Autofrettieren des Werkstücks eingerichtet ist, wobei der Durchlass koaxial zu einer Längsachse des Werkstücks angeordnet ist, wobei der zweite Flansch eine Ausnehmung aufweist, die koaxial zur Längsachse des Werkstücks angeordnet ist, wobei die Ausnehmung als hochdruckfeste Ausnehmung für Hochdruckfluid oder für einen Dorn des Stempels ausgebildet ist. Hierdurch können zuvor beschriebene Vorteile realisiert werden. Dabei kann im ersten Flansch ein geometrisch zum Stempel ausgebildetes Zwischenelement angeordnet sein.

Erfindungsgemäß weist der Stempel einen/den Dorn mit Übermaß bezüglich des Innenmaßes des Werkstücks eingerichtet für mechanisches Autofrettieren des Werkstücks auf.

Zumindest eine der zuvor beschriebenen Aufgaben wird erfindungsgemäß auch gelöst durch eine Autofrettage-Werkzeugvorrichtung mit einer Steuerungseinrichtung mit einer Logikeinheit eingerichtet zum Steuern eines erfindungsgemäßen Verfahrens und/oder einer erfindungsgemäßen Autofrettage-Werkzeugvorrichtung, wobei die Steuerungseinrichtung wenigstens einen Antrieb und eine Messeinrichtung umfassend wenigstens einen Sensor aufweist, wobei der Antrieb in Abhängigkeit von durch die Messeinrichtung erfassten Messwerten, insbesondere Druck, Kraft und/oder Weg, ansteuerbar ist. Dies liefert eine Möglichkeit, das Verfahren zu einem hohen Grade zu automatisieren und Fehlerquellen zu vermeiden. Die Steuerungseinrichtung kann einen Datenspeicher mit Daten bezüglich Werkstoffen und Werkstückgeometrien aufweisen, basierend auf welchen Daten bestimmte Sollwerte für die vorgenannten Parameter vordefinierbar und als minimale oder maximale Schwellwerte vorgebbar sind. Die Steuerungseinrichtung kann ferner in Kommunikation mit wenigstens einer Pumpe oder vergleichbaren Einrichtung zum Aufbringen eines Fluiddrucks im Innenvolumen von extern stehen.

Beispielsweise wird mittels einer am zweiten Flansch angeschlossenen Druckmessvorrichtung der Fluiddruck während des Autofrettagevorgangs überwacht und protokolliert.

Zumindest eine der zuvor beschriebenen Aufgaben wird erfindungsgemäß auch gelöst durch Verwendung einer Autofrettage-Werkzeugvorrichtung, insbesondere einer erfindungsgemäßen Autofrettage-Werkzeugvorrichtung, zum Autofrettieren eines Werkstücks, insbesondere eines Werkstücks aus der Gruppe: Pumpenkörper insbesondere bis zu einem Verhältnis von Länge zu Bohrungsdurchmessen von 15, Fittinge oder Rohrverbinder, Dichtlinsen, Ventilsitze, rohrförmige Teile oder drucktragende Bohrungen insbesondere bis zu einem Verhältnis von Länge zu Bohrungsdurchmesser von 20; sowohl auf mechanische Weise mittels eines Stempels als auch auf hydraulische Weise mittels Hochdruckfluid, insbesondere simultan mechanisch und hydraulisch. Dies liefert bereits zuvor genannte Vorteile.

### FIGURENBESCHREIBUNG

Weitere Merkmale und Vorteile der Erfindung ergeben sich aus der Beschreibung wenigstens eines Ausführungsbeispiels anhand von Zeichnungen, sowie aus den Zeichnungen selbst. Dabei zeigen
- Fig. 1: im Schnittbild eine Anordnung eines Werkstücks in einem Werkzeug gemäß vorbekannter rein hydraulischer Autofrettage;
- Fig. 2: im Schnittbild eine Anordnung eines Werkstücks in einem Werkzeug gemäß vorbekannter rein mechanischer Autofrettage;
- Fig. 3: im Schnittbild eine Anordnung eines Werkstücks in einer hydromechanische Autofrettage-Werkzeugvorrichtung gemäß einem Ausführungsbeispiel der Erfindung;
- Fig. 4: in schematischer Darstellung weitere Komponenten einer hydromechanischen Autofrettage-Werkzeugvorrichtung gemäß einem Ausführungsbeispiel der Erfindung;
- Fig. 5: in schematischer Darstellung einzelne Schritte eines Verfahrens gemäß Ausführungsformen der Erfindung;
- Fig. 6: im Schnittbild eine Anordnung eines Werkstücks in einer hydromechanische Autofrettage-Werkzeugvorrichtung gemäß einem Ausführungsbeispiel der Erfindung; und
- Fig. 7A, 7B: jeweils im Schnittbild im Detail einen ersten Flansch einer hydromechanische Autofrettage-Werkzeugvorrichtung gemäß einem Ausführungsbeispiel der Erfindung.

Bei Bezugszeichen, die nicht explizit in Bezug auf eine einzelne Figur beschrieben werden, wird auf die anderen Figuren verwiesen.

### DETAILLIERTE BESCHREIBUNG DER FIGUREN

Die Fig. 1 zeigt ein Werkstück 1, welches in einem Werkzeug 2 für hydraulische Autofrettage zwischen einem bodenseitigen Flansch 2.1 und einem deckelseitigen Flansch 2.2 jeweils an inneren Stirnseiten 2.11, 2.21 mittels Spannschrauben 2.3 verspannt ist. Eine Zuführleitung 2.22 für Hochdruckfluid HF ist mittels einer hochdruckbeständigen Kupplung 2.5 an die Oberseite des deckelseitigen Flansches 2.2 gekuppelt. Über einen Druckanschluss 2.4 kann Hochdruckfluid HF via einen im deckelseitigen Flansch 2.2 insbesondere als vergleichsweise dünne, kleine Bohrung ausgebildeten Durchlass in ein vom Werkstück 1 umgrenztes Innenvolumen Vi eingebracht werden.

Die Funktionsweise dieses Werkzeugs 2 lässt sich wie folgt beschreiben: Das Werkstück 1 wird in das Werkzeug 2 eingelegt und darin verspannt. Dabei oder in einem separaten Schritt muss die Hochdruckversorgung 2.4, 2.5 aufgebaut werden. Das Werkstück 1 wird daraufhin einem spezifisch je Werkstück zu definierenden hydraulischen Autofrettage-Druck Ph ausgesetzt. Üblich sind sehr hohe Drücke bis ca. 14.000bar. Derart hohe Drücke bedingen vergleichsweise kurze Wartungsintervalle, und es müssen hohe Sicherheitsanforderungen beachtet werden. Die hydraulischen Komponenten (insbesondere Pumpen, Rohrleitungen, Ventile) sind kostenintensive Spezialteile.

Zur Erzielung hoher Formgenauigkeiten bzw. enger Maßtoleranzen erfolgt in vielen Fällen eine Nachbehandlung. Die Fertigungstoleranzen können auch dadurch verbessert werden, dass die Verformung während des Druckaufbaus überwacht wird, insbesondere mittels Dehnungsmessstreifen.

Die Fig. 2 zeigt ein Werkstück 1, welches in einem Werkzeug 3 für mechanische Autofrettage zwischen einer Auflage 3.11 einer Grundplatte 3.1 und einem Stempel 3.5 angeordnet ist. Ein vom Werkstück 1 lateral/radial umgrenztes Innenvolumen Vi ist fluchtend bzw. koaxial zu einer Aussparung 3.12 in der Grundplatte 3.1 angeordnet. Der Stempel weist ein freies Ende 3.51, insbesondere in der Art eines Dorns auf, welches in Längsrichtung/Vorschubrichtung des Stempels durch eine bugseitige Fase 3.52 und eine heckseitige Fase 3.54 definiert ist, zwischen welchen Fasen eine Mantelfläche 3.53 ausgebildet ist.

Die Funktionsweise dieses Werkzeugs 3 lässt sich wie folgt beschreiben: Der Stempel 3.5 wird mit einer Kraft F1 durch das Innenvolumen Vi des stabil auf der Grundplatte 3.1 angeordneten Werkstücks 1 getrieben, bis das freie Ende 3.51 die Aussparung 3.12 erreicht. Danach weist das Werkstück 1 eine Innengeometrie zumindest annähernd entsprechend jener des freien Endes 3.51 auf, insbesondere eine zylindrische Innengeometrie.

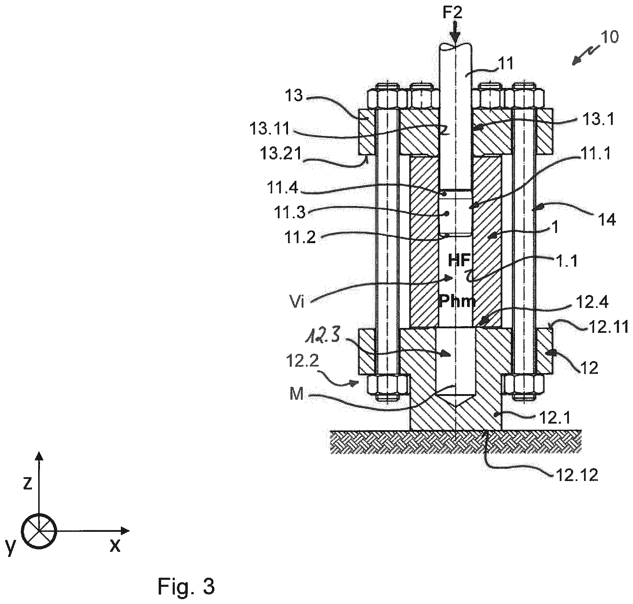

Die Fig. 3 zeigt ein Werkstück 1, z.B. zylindrischer Druckbehälter, oder Hochdruckrohr, welches in einer hydromechanischen Autofrettage-Werkzeugvorrichtung 10 zwischen einem bodenseitigen Grundflansch 12 und einem deckelseitigen Flansch 13 jeweils an inneren Stirnseiten mittels einer Flanschverschraubung 14 umfassend Spannschrauben oder dergleichen verspannt ist. Der Grundflansch 12 weist einen Sockel 12.1 und eine Schulter 12.2 auf. Ein vom Werkstück 1 lateral/radial umgrenztes Innenvolumen Vi ist fluchtend bzw. koaxial zu einer hochdruckbeständigen Ausnehmung 12.3 im Grundflansch 12 angeordnet. Die Ausnehmung 12.3 ist insbesondere als Sackloch(-bohrung) ausgebildet. Die Ausnehmung 12.3 weist Innenabmessungen bzw. einen Innendurchmesser auf, der/die etwas größer ist/sind als die Außenabmessungen bzw. ein Außendurchmesser des Stempels 11. Nach unten hin ist der Grundflansch 12 massiv und nicht offen. Der Grundflansch 12 weist eine z.B. kreisförmige Unterseite 12.12 auf, die insbesondere als Auflagefläche für die gesamte Werkzeugvorrichtung 10 eingerichtet ist, also auch zum Aufnehmen und Weiterleiten von Stempelkräften.

Der deckelseitige Flansch 13 weist einen Durchlass 13.1 auf, dessen Innenmantelfläche 13.11 geometrisch korrespondierend zu einem Stempel 11 der Werkzeugvorrichtung 10 ausgebildet sein kann, insbesondere zylindrisch. Der Durchlass 13.1 weist Innenabmessungen bzw. einen Innendurchmesser auf, der/die etwas größer ist/sind als die Außenabmessungen bzw. ein Außendurchmesser des Stempels 11. Der Stempel 11 weist ein freies Ende 11.1, insbesondere in der Art eines Dorns auf, welches in Längsrichtung/Vorschubrichtung des Stempels durch eine bugseitige Fase 11.2 und eine heckseitige Fase 11.4 definiert ist, zwischen welchen Fasen eine Mantelfläche 11.3 ausgebildet ist.

Die Werkzeugvorrichtung 10 erstreckt sich in Vorschubrichtung des Stempels entlang einer Mittenlängsachse M, insbesondere Symmetrieachse. In das insbesondere zylindrische Innenvolumen Vi kann Hochdruckfluid HF eingebracht werden.

Die erfindungsgemäße Funktionsweise dieser erfindungsgemäßen Werkzeugvorrichtung 10 lässt sich nun im Detail wie folgt beschreiben, wobei drei aufeinanderfolgende Schritte hervorgehoben werden können:
Das Werkstück 1 wird in einem ersten Schritt S1 auf dem Grundflansch 12 fluchtend bzw. koaxial zur Sacklochbohrung bzw. Ausfräsung 12.3 angeordnet und dabei druckdicht verschlossen bzw. abgedichtet, insbesondere sowohl an einem umlaufenden Dichtmittel 12.4, z.B. einem Dichtring oder einer umlaufenden Erhebung oder einem umlaufenden Steg an einer inneren Stirnseite 12.11 des Grundflansches 12, als auch an einer inneren Stirnseite 13.21 des deckelseitigen Flansches 13. Dies kann durch Verspannen des Grundflansches 12 mit dem deckelseitigen Flansch 13 erfolgen. Dabei wird das Werkstück 1 derart in der Werkzeugvorrichtung 10 angeordnet, dass das vom Werkstück 1 umgrenzte Innenvolumen Vi sich im Durchlass 13.1 und in der Ausnehmung 12.3 jeweils fortsetzt. Der Durchlass 13.1, die Ausnehmung 12.3 und das vom Werkstück 1 umgrenzte Innenvolumen Vi bilden dabei drei fluchtend, insbesondere koaxial in Reihen angeordneten Innenvolumina.

Das Dichtungssystem oder Dichtmittel 12.4 ist schematisch exemplarisch dargestellt für zur Hochdrucktechnik zugelassene oder geeignete Dichtungen oder Dichtungssysteme.

Daraufhin wird in einem zweiten Schritt S2 Hochdruckfluid HF in das vom Werkstück 1 und den Flanschen 12, 13 umgrenzte Innenvolumen Vi gefüllt. Dabei muss noch nicht notwendigerweise ein hoher Druck aufgebaut werden. Ein Hochdruckanschluss kann entfallen.

Das Befüllen mit Hochdruckfluid HF kann derart erfolgen, dass Hochdruckfluid HF nicht nur in der Ausnehmung 12.3 und im Innenvolumen Vi vorliegt, sondern auch im durch den Durchlass 13.1 definierten Innenvolumen. Das Volumen des verwendeten Hochdruckfluides HF kann also deutlich größer sein als das vom Werkstück 1 umgrenzte Innenvolumen Vi.

In einem darauffolgenden dritten Schritt S3 wird der Stempel 11 bzw. Dorn 11.1 durch das Innenvolumen Vi des Werkstücks 1 getrieben, insbesondere derart, dass dabei folgender Effekt erzeugt wird: das Hochdruckfluid HF entweicht zwischen Dorn 11.1 und Innenwand bzw. Innenmantelfläche 1.1 des Werkstücks 1 nach oben bzw. zum Heck des Dorns 11.1 heckseitig hinter den Dorn 11.1. Hochdruckfluid HF kann am Dorn 11.1 vorbei abströmen, sobald ein gewisser Innendruck aufgebaut wurde. Dies kann in Abhängigkeit einer bestimmten Vorschubgeschwindigkeit erfolgen. Der Stempel 11 wird dabei mit einer für hydromechanische Autofrettage vordefinierten oder kontinuierlich justierten Stempelkraft F2 vorgeschoben, und im Innenvolumen Vi wird ein für hydromechanische Autofrettage vordefinierter oder kontinuierlich justierter hydromechanischer Autofrettagedruck Phm eingestellt. Der Stempel 11 kann bis hin zur Ausnehmung 12.3 vorgeschoben werden, insbesondere so weit, dass die heckseitige Fase 11.4 bis in die Ausnehmung 12.3 verlagert ist.

Die Tiefe der Ausnehmung 12.3 ist für diesen Zweck mindestens so groß wie die Länge des freien Endes 11.1, insbesondere wie die Länge eines Übermaßes des freien Endes 11.1.

Mittels hydromechanischer Autofrettage erzielbare Vorteile lassen sich nochmals wie folgt zusammenfassen:
Das Verfahren kann selbstregulierend durchgeführt werden, da mit zunehmendem Innendruck die Menge des abströmenden Hochdruckfluides ansteigen kann. Reibkräfte zwischen Dorn und Innenwand können vermindert werden, insbesondere da das Hochdruckfluid dabei eine Schmiermittel-Funktion übernehmen kann. Dabei kann das Hochdruckfluid auch in die Oberflächenstruktur des Werkstücks hineingepresst werden. Ein heckseitiger Abschnitt des Dorns kann die Oberfläche abschließend glätten und verdichten. Es hat sich gezeigt, dass mittels des vorbeiströmenden Hochdruckfluides in Verbindung mit einer hohen Oberflächenpressung ein hoher Grad an Oberflächenvergütung erzielt werden kann. Riefen können ausgeschlossen werden.

Insbesondere ist hierdurch auch keine Nachbearbeitung der Innenfläche(n) mehr erforderlich. Es kann eine präzise, maßhaltige Innenkontur in einem sehr engen Toleranzbereich realisiert werden. Auch kann die Plastifizierung bzw. Innendehnung des Werkstücks in einem höheren Grad erfolgen als bei der hydraulischen Autofrettage, insbesondere zumindest annähernd bis zur "Durchplastifizierung". Nicht zuletzt kann die Werkzeugvorrichtung, insbesondere der Dorn auch über eine längere Lebensdauer bzw. Standzeit betrieben/verwendet werden als bei der mechanischen Autofrettage.

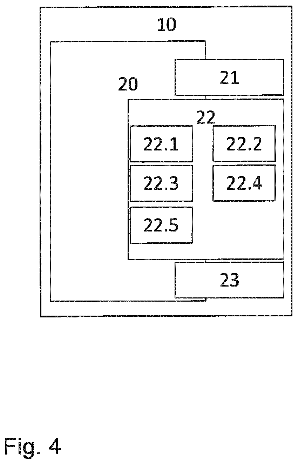

In der Figur 4 wird eine Steuerungseinrichtung 20 beschrieben, mittels welcher die erfindungsgemäße Werkzeugvorrichtung 10 betrieben werden kann, insbesondere durch einzelne oder alle der erfindungsgemäßen Verfahrensschritte. Ein Antrieb 21 liefert eine Vorschub- oder Stempelkraft F2. Der Antrieb 21 kann auch eine Pumpe zum Einbringen oder Abpumpen von Hydraulikfluid aufweisen. Eine in Kommunikation mit einer Logikeinheit 23 der Steuerungseinrichtung 20 stehende Messeinrichtung 22 umfasst mehrere Sensoren, insbesondere wenigstens einen Druck-/Kraftsensor 22.1 (der/die beispielsweise am oder im Grundflansch 12 ist/sind), wenigstens einen Positionssensor 22.2 für die (Momentan-)Position des Stempels (der/die beispielsweise am oder im deckelseitigen Flansch 13 ist/sind), wenigstens eine Messeinheit 22.3 für die Vorschubgeschwindigkeit, wenigstens einen Kraftsensor für die Stempelkraft 22.4, wenigstens einen Durchflusssensor 22.5. Alle Sensoren können während des erfindungsgemäßen Verfahrens Messwerte erfassen und an die Logikeinheit liefern.

Die in der Figur 4 gezeigten Komponenten können beispielsweise bei einer Werkzeugvorrichtung gemäß dem in Figur 3 beschriebenen Ausführungsbeispiel vorgesehen sein.

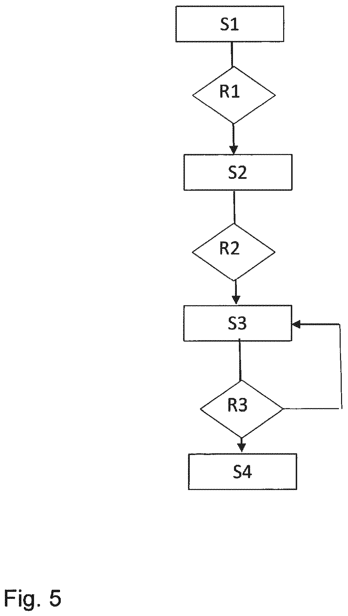

In der Figur 5 werden einzelne Verfahrensschritte im Detail beschrieben: Im ersten Schritt S1 wird das Werkstück in der Werkzeugvorrichtung angeordnet. In einem ersten Steuerungs-/Regelungspunkt R1 kann eine Vorspannkraft überwacht oder eingestellt werden, mittels welcher das Werkstück eingespannt und dadurch hinsichtlich vordefinierbarer Überdrücke abgedichtet wird. Im zweiten Schritt S2 wird Hochdruckfluid in das Innenvolumen des Werkstücks eingebracht. In einem zweiten Steuerungs-/Regelungspunkt R2 kann die Menge eingebrachten Hochdruckfluides eingestellt oder überwacht werden, insbesondere basierend auf Messwerten eines Durchflusssensors, der z.B. an einer Zuleitung zum Innenvolumen angeordnet sein kann. Im dritten Schritt S3 wird ein Stempel durch das Innenvolumen des Werkstücks getrieben. In einem dritten Steuerungs-/Regelungspunkt R3 kann der insbesondere der Druck im Innenvolumen und/oder die Vorschubgeschwindigkeit des Stempels überwacht oder eingestellt werden.

In einem vierten Schritt S4 kann der Stempel 11 bzw. der Dorn in einer Ausnehmung 12.3 positioniert werden, insbesondere derart, dass das freie Ende 11.1 vom Werkstück 1 entkoppelt ist. Die Werkzeugvorrichtung 10 kann nun demontiert werden, und das Werkstück 1 kann entnommen werden. Wahlweise kann dabei Hochdruckfluid HF vor der Demontage abgepumpt werden. Dabei kann der Stempel ohne den Dorn wieder zurück durch das Werkstück gezogen werden. Der Stempel kann also zunächst wieder zurückbewegt werden, insbesondere entgegen der Vorschubrichtung/-achse (z), insbesondere komplett aus dem Werkstück 1 heraus, bevor die Werkzeugvorrichtung 10 demontiert wird.

Eine der möglichen Ausgestaltungen des Verfahrens wird im Folgenden nochmals zusammenhängend beschrieben.

Nachdem der eigentliche Autofrettage-Vorgang beendet ist, wird der Stempel ohne Dorn aus dem Werkstück bzw. aus der entsprechenden Komponente der Werkzeugvorrichtung herausgezogen. Der Dorn verbleibt dabei in der Ausnehmung. Das Werkstück wird nun aus der Werkzeugvorrichtung, die z.B. in einer hydraulischen Presse angeordnet sein kann oder zumindest Bestandteile davon umfasst, herausgenommen. Der Dorn wird dann aus der Ausnehmung entnommen. Daraufhin erfolgt die Montage für ein weiteres, unbehandeltes Werkstück. Besonders vorteilhaft hinsichtlich hoher Stückzahlen kann es sein, mit mehreren Werkzeugvorrichtungen bzw. mehreren Dornen parallel zu arbeiten.

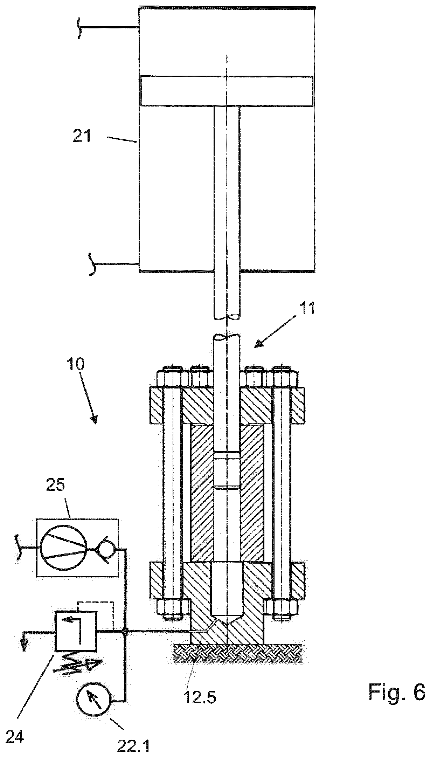

In der Figur 6 ist eine hydromechanische Autofrettage-Werkzeugvorrichtung 10 gezeigt, die zusätzlich zu den zuvor beschriebenen Komponenten auch noch eine Hochdruckleitung 12.5 nach extern, hier ausgeführt als Bohrung im Sockel 12.1 aufweist. Mittels eines Druckbegrenzers 24 und einer externen Einrichtung zur Druckerzeugung, insbesondere einer Pumpe 25 kann eine Druckregelung von extern erfolgen, insbesondere zeitweise zusätzlich zur Druckregelung über den Vorschub des Stempels. Dazu können extern ein oder mehrere Drucksensoren 22.1 vorgesehen sein.

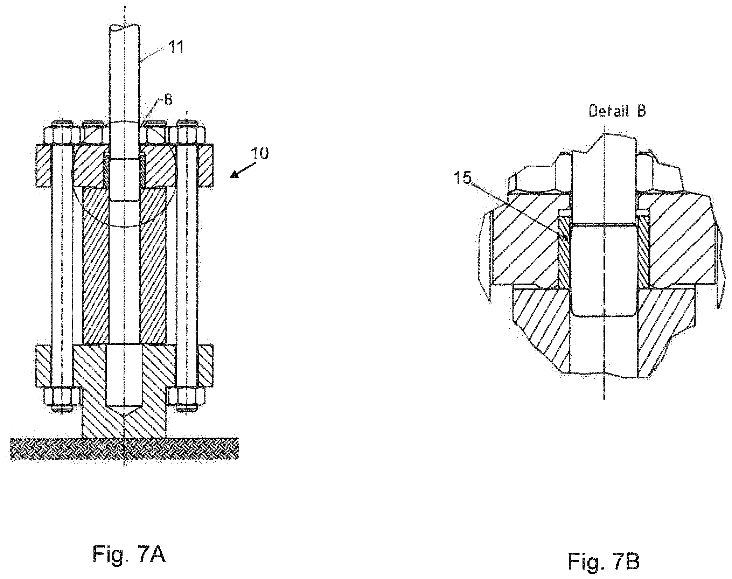

In den Figuren 7A, 7B ist eine hydromechanische Autofrettage-Werkzeugvorrichtung 10 gezeigt, die zusätzlich zu den zuvor beschriebenen Komponenten auch noch ein Zwischenelement 15 aufweist, insbesondere ausgebildet als Passhülse. Das Zwischenelement 15 ist in einer geometrisch korrespondierenden Ausnehmung im ersten Flansch 13 angeordnet und liegt auf dem Werkstück 1 auf. Zwischenelement 15 und Dorn bilden eine Presspassung, mit dem Effekt, dass Hochdruck bereits im Abschnitt oberhalb des Werkstückes 1 aufgebaut werden kann. Die Genauigkeit des Verfahrens kann dadurch verbessert werden. Der gewünschte Hochdruck kann sofort aufgebaut werden, also noch bevor der Dorn in Kontakt mit dem Werkstück 1 gelangt.

### Bezugszeichenliste:

- 1: Werkstück, z.B. zylindrischer Druckbehälter, oder Hochdruckrohr
- 1.1: Innenwand bzw. Innenmantelfläche
- 2: vorbekanntes Werkzeug für hydraulische Autofrettage
- 2.1: bodenseitiger Flansch
- 2.11: innere Stirnseite
- 2.2: deckelseitiger Flansch
- 2.21: innere Stirnseite
- 2.22: Zuführleitung für Hochdruckfluid
- 2.23: Durchlass für Hochdruckfluid
- 2.3: Spannschraube
- 2.4: Druckanschluss für Hochdruckfluid
- 2.5: hochdruckbeständige Kupplung für Zuführleitung

- 3: vorbekanntes Werkzeug für mechanische Autofrettage
- 3.1: Grundplatte
- 3.11: Auflage
- 3.12: Aussparung
- 3.5: Stempel
- 3.51: freies Ende des Stempels, insbesondere Dorn
- 3.52: bugseitige Fase
- 3.53: Mantelfläche
- 3.54: heckseitige Fase

- 10: hydromechanische Autofrettage-Werkzeugvorrichtung
- 11: Stempel, insbesondere zylindrisch
- 11.1: freies Ende des Stempels, insbesondere Dorn
- 11.2: bugseitige Fase des freien Endes
- 11.3: Mantelfläche des freien Endes
- 11.4: heckseitige Fase des freien Endes
- 12: zweite Fixierung, insbesondere bodenseitiger Grundflansch
- 12.1: Sockel
- 12.11: innere Stirnseite
- 12.12: Unterseite, insbesondere Auflagefläche
- 12.2: Schulter
- 12.3: Ausnehmung, insbesondere Sackloch(-bohrung)
- 12.4: Dichtungssystem oder Dichtmittel
- 12.5: Hochdruckleitung nach extern, insbesondere Bohrung in Sockel
- 13: erste Fixierung, insbesondere einführ-/deckelseitiger Flansch
- 13.1: Durchlass geometrisch korrespondierend zum Stempel
- 13.11: Innenmantelfläche des Durchlasses
- 13.21: innere Stirnseite
- 14: Befestigung der Fixierungen, insbesondere Flanschverschraubung
- 15: Zwischenelement, insbesondere Passhülse

- 20: Steuerungseinrichtung
- 21: Antrieb
- 22: Messeinrichtung
- 22.1: Druck-/Kraftsensor
- 22.2: Positionssensor
- 22.3: Messeinheit, insbesondere für Geschwindigkeit
- 22.4: Kraftsensor für Stempelkraft
- 22.5: Durchflusssensor
- 23: Logikeinheit
- 24: Druckbegrenzer
- 25: externe Einrichtung zur Druckerzeugung, insbesondere Pumpe

- F1: Stempelkraft rein mechanisch
- F2: Stempelkraft hydromechanisch
- HF: Hochdruckfluid
- M: Mittenlängsachse, insbesondere Symmetrieachse
- Ph: hydraulischer Autofrettagedruck
- Phm: hydromechanischer Autofrettagedruck
- R1: Steuerungs-/Regelungspunkt bezüglich einer Vorspannkraft
- R2: Steuerungs-/Regelungspunkt bezüglich der Menge eingebrachten Hochdruckfluides
- R3: Steuerungs-/Regelungspunkt bezüglich des Druckes im Innenvolumen und/oder bezüglich der Vorschubgeschwindigkeit des Stempels

- S1: Schritt eines Anordnens des Werkstücks in der Werkzeugvorrichtung
- S2: Schritt eines Einbringens von Hochdruckfluid in das Innenvolumen des Werkstücks
- S3: Schritt eines Treibens eines Stempels durch das Innenvolumen des Werkstücks
- S4: Schritt eines Positionierens des Stempels

- Vi: Innenvolumen

- x, y, z: Breiten-, Tiefen- und Höhenrichtung

## Patentansprüche

1. Verfahren zum Autofrettieren eines Werkstücks (1) mit einer Innenmantelfläche (1.1), wobei das Werkstück zwischen einer ersten Fixierung (2.2; 13) und einer zweiten Fixierung (2.1; 12) angeordnet wird, wobei ein zwischen den Fixierungen gebildetes Innenvolumen (Vi) des Werkstücks mit Hochdruckfluid (HF) beaufschlagt wird,
**dadurch gekennzeichnet, dass** durch einen Durchlass (13.1) in der ersten Fixierung (13) ein Stempel (11) in das Innenvolumen getrieben wird, und dass durch Vorschub des Stempels mittels des Stempels einerseits ein Fluiddruck im Innenvolumen (Vi) erzeugt wird und andererseits das Werkstück (1) mechanisch autofrettiert wird, wobei mittels des Stempels (11) der Fluiddruck zur hydraulischen Autofrettage erzeugt wird, und wobei das Werkstück (1) mittels eines Dorns (11.1, 3.51) des Stempels mit Übermaß bezüglich des Innenmaßes des Werkstücks mechanisch autofrettiert wird, wobei der Dorn (11.1, 3.51) durch das Innenvolumen (Vi) des Werkstücks (1) getrieben wird, derart, dass das Hochdruckfluid (HF) zwischen Dorn (11.1, 3.51) und Innenmantelfläche (1.1) des Werkstücks (1) zum Heck des Dorns (11.1, 3.51) heckseitig hinter den Dorn (11.1, 3.51) entweicht.

2. Verfahren nach Anspruch 1, wobei der Vorschub des Stempels (11) derart erfolgt, dass Hochdruckfluid (HF) zwischen einem Dorn (11.1, 3.51) des Stempels und dem Werkstück (1) durchgepresst wird und entlang des Stempels in Richtung zur ersten Fixierung (13) abfließt.

3. Verfahren nach Anspruch 1 oder 2, wobei der Stempel (11) bis in eine hochdruckfeste Ausnehmung (12.3) in der zweiten Fixierung (12) vorgeschoben wird, insbesondere in eine Sacklochbohrung.

4. Verfahren nach einem der vorhergehenden Verfahrensansprüche, wobei das Innenvolumen (Vi) drucklos mit Hochdruckfluid (HF) befüllt wird, bevor der Stempel (11) in das Innenvolumen vorgeschoben wird.

5. Verfahren nach einem der vorhergehenden Verfahrensansprüche, wobei Hochdruck durch Vorschub des Stempels (11) aufgebaut wird; und/oder wobei eine druckbedingte Aufweitung durch ein Übermaß des Stempels definiert wird, insbesondere unabhängig von einer Vorschubgeschwindigkeit; oder wobei der Vorschub des Stempels (11) so eingestellt wird, dass eine Dehnung des Werkstücks (1) ein Vorbeiströmen von Hochdruckfluid (HF) aus dem Innenvolumen (Vi) an einem/dem Dorn (11.1, 3.51) des Stempels vorbei bewirkt.

6. Verfahren nach einem der vorhergehenden Verfahrensansprüche, wobei an der Fixierung (12) nach dem Einführen des Stempels (11) in das Werkstück (1) von extern ein Fluiddruck im Innenvolumen (Vi) aufgebaut wird; und/oder wobei über einen an der zweiten Fixierung (12) angeschlossenen Druckbegrenzer (24) der Fluiddruck auf einen definierten Wert unterhalb des sich aufgrund des Vorschubs des Stempels (11) ergebenden Druckniveaus eingestellt wird.

7. Autofrettage-Werkzeugvorrichtung (10) zum Autofrettieren eines Werkstücks (1), umfassend eine erste Fixierung (2.2; 13) und eine zweite Fixierung (2.1; 12), zwischen welchen ein Innenvolumen (Vi) des Werkstücks anordenbar ist, in welches Innenvolumen ein Hochdruckfluid (HF) einbringbar ist,
**dadurch gekennzeichnet, dass** die Autofrettage-Werkzeugvorrichtung (10) einen Stempel (11) eingerichtet für mechanisches Autofrettieren des Werkstücks umfasst, wobei die erste Fixierung (13) einen Durchlass (13.1) für den Stempel aufweist, wobei die Autofrettage-Werkzeugvorrichtung mittels des Hochdruckfluides und des Stempels zum hydromechanischen Autofrettieren des Werkstücks eingerichtet ist, wobei der Stempel (11) ein freies Ende in Form eines Dorns (11.1, 3.51) mit Übermaß bezüglich des Innenmaßes des Werkstücks eingerichtet für mechanisches Autofrettieren des Werkstücks aufweist, wobei das freie Ende in Längsrichtung/Vorschubrichtung des Stempels durch eine bugseitige Fase (11.2, 3.52) und eine heckseitige Fase (11.4, 3.54) definiert ist, zwischen welchen Fasen eine Mantelfläche (11.3, 3.53) ausgebildet ist.

8. Autofrettage-Werkzeugvorrichtung nach dem vorhergehenden Vorrichtungsanspruch, wobei der Durchlass (13.1) fluchtend, insbesondere koaxial zur Längsachse (M) des Werkstücks angeordnet ist; und/oder wobei die zweite Fixierung (12) eine Ausnehmung (12.3) aufweist, die fluchtend, insbesondere koaxial zur Längsachse (M) des Werkstücks angeordnet ist, wobei die Ausnehmung (12.3) als hochdruckfeste Ausnehmung für Hochdruckfluid oder für einen Dorn (11.1, 3.51) des Stempels ausgebildet ist.

9. Autofrettage-Werkzeugvorrichtung nach einem der vorhergehenden Vorrichtungsansprüche, wobei ein/der Dorn (11.1, 3.51) des Stempels (11) demontierbar am Stempel befestigt ist oder dem Stempel stirnseitig vorgelagert ist; und/oder wobei ein/der Dorn (11.1, 3.51) des Stempels eine bugseitige Fase (11.2, 3.52) und eine heckseitige Fase (11.4, 3.54) aufweist, zwischen welchen Fasen eine zylindrische oder konisch zum Heck breiter werdende Mantelfläche (11.3, 3.53) ausgebildet ist.

10. Autofrettage-Werkzeugvorrichtung nach einem der vorhergehenden Vorrichtungsansprüche, wobei die zweite Fixierung (12) massiv ist; oder wobei die zweite Fixierung eine Unterseite (12.12) eingerichtet zur Ablage der Werkzeugvorrichtung und zum Übertragen von Stempelkräften aufweist.

11. Autofrettage-Werkzeugvorrichtung nach einem der vorhergehenden Vorrichtungsansprüche, wobei in der ersten Fixierung (13) ein geometrisch zum Stempel ausgebildetes Zwischenelement (15) angeordnet ist.

12. Autofrettage-Werkzeugvorrichtung nach Anspruch 7, mit einer Steuerungseinrichtung (20) mit einer Logikeinheit (23), eingerichtet zum Steuern eines Verfahrens nach einem der vorhergehenden Verfahrensansprüche und/oder einer Autofrettage-Werkzeugvorrichtung nach einem der vorhergehenden Vorrichtungsansprüche, wobei die Steuerungseinrichtung wenigstens einen Antrieb (21) und eine Messeinrichtung (22) umfassend wenigstens einen Sensor (22.1, 22.2, 22.3, 22.4, 22.5) aufweist, wobei der Antrieb in Abhängigkeit von durch die Messeinrichtung erfassten Messwerten, insbesondere Druck, Kraft und/oder Weg, ansteuerbar ist.

13. Verwendung einer Autofrettage-Werkzeugvorrichtung (10) nach einem der vorhergehenden Vorrichtungsansprüche 7 bis 11, zum Autofrettieren eines Werkstücks (1), insbesondere eines Werkstücks aus der Gruppe: Pumpenkörper insbesondere bis zu einem Verhältnis von Länge zu Bohrungsdurchmessen von 15, Fittinge oder Rohrverbinder, Dichtlinsen, Ventilsitze, rohrförmige Teile oder drucktragende Bohrungen insbesondere bis zu einem Verhältnis von Länge zu Bohrungsdurchmesser von 20; sowohl auf mechanische Weise mittels eines Stempels (11) als auch auf hydraulische Weise mittels Hochdruckfluid (HF), nämlich simultan mechanisch und hydraulisch.

## Claims

1. Method for autofretting a workpiece (1) having an inner surface (1.1), the workpiece being arranged between a first fixing (2.2; 13) and a second fixing (2.1; 12), an internal volume (Vi) of the workpiece formed between the fixings being acted upon by high-pressure fluid (HF),
**characterized in that** through a passage (13. 1) in the first fixing (13), a punch (11) is driven into the inner volume, and **in that**, on the one hand, a fluid pressure is generated in the inner volume (Vi) by advancing the punch by means of the punch and, on the other hand, the workpiece (1) is mechanically autofretted, the fluid pressure for hydraulic autofrettage being generated by means of the punch (11), and the workpiece (1) being mechanically autofretted by means of a mandrel (11. 1, 3.51) of the punch with oversize with respect to the inner dimension of the workpiece, the mandrel (11.1, 3.51) being driven through the inner volume (Vi) of the workpiece (1) in such a way that the high-pressure fluid (HF) escapes between the mandrel (11.1, 3.51) and the inner surface (1.1) of the workpiece (1) towards the rear of the mandrel (11.1, 3.51) behind the mandrel (11.1, 3.51).

2. Method according to claim 1, wherein the feed of the punch (11) takes place in such a way that high-pressure fluid (HF) is pressed through between a mandrel (11.1, 3.51) of the punch and the workpiece (1) and flows off along the punch in the direction of the first fixing (13).

3. Method according to claim 1 or 2, wherein the punch (11) is advanced into a high-pressure-resistant recess (12.3) in the second fixing (12), in particular into a blind hole.

4. Method according to one of the preceding method claims, wherein the inner volume (Vi) is filled with high-pressure fluid (HF) without pressure before the plunger (11) is advanced into the inner volume.

5. Method according to one of the preceding method claims, wherein high pressure is built up by advancing the punch (11); and/or wherein a pressure-induced expansion is defined by an oversize of the punch, in particular independently of an advance speed; or wherein the advance of the punch (11) is set such that an elongation of the workpiece (1) causes high-pressure fluid (HF) to flow past one/the mandrel (11.1, 3.51) of the punch from the internal volume (Vi).

6. Method according to one of the preceding method claims, wherein a fluid pressure is built up externally in the internal volume (Vi) at the fixing (12) after the insertion of the punch (11) into the workpiece (1); and/or wherein the fluid pressure is set to a defined value below the pressure level resulting from the advance of the punch (11) via a pressure limiter (24) connected to the second fixing (12).

7. Autofrettage tool device (10) for autofrettage of a workpiece (1), comprising a first fixture (2.2; 13) and a second fixture (2. 1; 12), between which an inner volume (Vi) of the workpiece can be arranged, into which inner volume a high-pressure fluid (HF) can be introduced, **characterized in that** the autofrettage tool device (10) comprises a punch (11) set up for mechanical autofrettage of the workpiece, the first fixing (13) having a passage (13. 1) for the punch, the autofrettage tool device being set up for hydromechanical autofrettage of the workpiece by means of the high-pressure fluid and the punch, the punch (11) having a free end in the form of a mandrel (11.1, 3. 51) with oversize with respect to the inner dimension of the workpiece, set up for mechanical autofrettage of the workpiece, the free end being defined in the longitudinal direction/feed direction of the punch by a bow-side chamfer (11.2, 3.52) and a rear-side chamfer (11.4, 3.54), between which chamfers a lateral surface (11.3, 3.53) is formed.

8. Autofrettage tool device according to the preceding device claim, wherein the passage (13.1) is arranged in alignment, in particular coaxially, with the longitudinal axis (M) of the workpiece; and/or wherein the second fixing (12) has a recess (12.3) which is arranged in alignment, in particular coaxially, with the longitudinal axis (M) of the workpiece, wherein the recess (12.3) is designed as a high-pressure-resistant recess for high-pressure fluid or for a mandrel (11.1, 3.51) of the punch.

9. Autofrettage tool device according to one of the preceding device claims, wherein a/the mandrel (11.1, 3.51) of the punch (11) is attached to the punch in a removable manner or is mounted in front of the punch on the end face; and/or wherein a/the mandrel (11. 1, 3.51) of the punch has a bow-side chamfer (11.2, 3.52) and a rear-side chamfer (11.4, 3.54), between which chamfers a cylindrical or conical lateral surface (11.3, 3.53) which widens towards the rear is formed.

10. Autofrettage tool device according to one of the preceding device claims, wherein the second fixing (12) is solid; or wherein the second fixing has an underside (12.12) set up for supporting the tool device and for transmitting punch forces.

11. Autofrettage tool device according to one of the preceding device claims, wherein an intermediate element (15) geometrically designed as a punch is arranged in the first fixing (13).

12. Autofrettage tool device according to claim 7, having a control device (20) with a logic unit (23), set up for controlling a method according to one of the preceding method claims and/or an autofrettage tool device according to one of the preceding device claims, the control device having at least one drive (21) and a measuring device (22) comprising at least one sensor (22.1, 22.2, 22.3, 22.4, 22.5), the drive being controllable as a function of measured values detected by the measuring device, in particular pressure, force and/or displacement.

13. Use of an autofrettage tool device (10) according to one of the preceding device claims 7 to 11, for autofrettage of a workpiece (1), in particular a workpiece from the group: Pump bodies in particular up to a ratio of length to bore diameter of 15, fittings or pipe connectors, sealing lenses, valve seats, tubular parts or pressure-bearing bores in particular up to a ratio of length to bore diameter of 20; both in a mechanical manner by means of a punch (11) and in a hydraulic manner by means of high-pressure fluid (HF), namely simultaneously mechanically and hydraulically.

## Revendications

1. Procédé d'autofrettage d'une pièce (1) avec une surface d'enveloppe intérieure (1.1), la pièce étant disposée entre une première fixation (2.2 ; 13) et une deuxième fixation (2.1 ; 12), un volume intérieur (Vi) de la pièce formé entre les fixations étant alimenté en fluide à haute pression (HF),
en ce que, à travers un passage (13. 1) dans la première fixation (13), un poinçon (11) est enfoncé dans le volume intérieur, et en ce que, par l'avance du poinçon au moyen du poinçon, d'une part une pression de fluide est générée dans le volume intérieur (Vi) et d'autre part la pièce (1) est autofrettée mécaniquement, la pression de fluide étant générée au moyen du poinçon (11) pour l'autofrettage hydraulique, et la pièce (1) étant fixée au moyen d'un mandrin (11. 1, 3.51) du poinçon est autofretté mécaniquement avec une surdimension par rapport à la dimension intérieure de la pièce, le poinçon (11.1, 3.51) étant entraîné à travers le volume intérieur (Vi) de la pièce (1) de telle sorte que le fluide à haute pression (HF) entre le poinçon (11.1, 3.51) et la surface d'enveloppe intérieure (1.1) de la pièce (1) s'échappe vers l'arrière du poinçon (11.1, 3.51) derrière le poinçon (11.1, 3.51).

2. Procédé selon la revendication 1, dans lequel l'avance du poinçon (11) est telle que du fluide haute pression (HF) est pressé entre un mandrin (11.1, 3.51) du poinçon et la pièce (1) et s'écoule le long du poinçon en direction de la première fixation (13).

3. Procédé selon la revendication 1 ou 2, dans lequel le poinçon (11) est avancé jusque dans un évidement (12.3) résistant aux hautes pressions dans la deuxième fixation (12), en particulier dans un trou borgne.

4. Procédé selon l'une des revendications précédentes, dans lequel le volume intérieur (Vi) est rempli sans pression de fluide à haute pression (HF) avant que le poinçon (11) ne soit avancé dans le volume intérieur.

5. Procédé selon l'une des revendications de procédé précédentes, dans lequel la haute pression est établie par l'avance du poinçon (11) ; et/ou dans lequel un élargissement dû à la pression est défini par une surcote du poinçon, en particulier indépendamment d'une vitesse d'avance ; ou dans lequel l'avance du poinçon (11) est réglée de telle sorte qu'un allongement de la pièce (1) provoque un écoulement préalable de fluide haute pression (HF) hors du volume intérieur (Vi) devant un/le mandrin (11.1, 3.51) du poinçon.

6. Procédé selon l'une des revendications précédentes, dans lequel une pression de fluide est établie de l'extérieur dans le volume intérieur (Vi) au niveau de la fixation (12) après l'introduction du poinçon (11) dans la pièce à usiner (1) ; et/ou dans lequel la pression de fluide est réglée à une valeur définie en dessous du niveau de pression résultant de l'avance du poinçon (11) par l'intermédiaire d'un limiteur de pression (24) raccordé à la deuxième fixation (12).

7. Dispositif d'outillage d'autofrettage (10) pour l'autofrettage d'une pièce à usiner (1), comprenant une première fixation (2.2 ; 13) et une deuxième fixation (2. 1 ; 12) entre lesquels peut être disposé un volume intérieur (Vi) de la pièce à usiner, volume intérieur dans lequel peut être introduit un fluide à haute pression (HF), **caractérisé en ce que** le dispositif d'outillage d'autofrettage (10) comprend un poinçon (11) aménagé pour l'autofrettage mécanique de la pièce à usiner, la première fixation (13) présentant un passage (13. 1) pour le poinçon, le dispositif d'outillage d'autofrettage étant conçu pour l'autofrettage hydromécanique de la pièce à usiner au moyen du fluide à haute pression et du poinçon, le poinçon (11) présentant une extrémité libre sous la forme d'un mandrin (11.1, 3. 51) avec une surdimension par rapport à la dimension intérieure de la pièce à usiner, conçu pour l'autofrettage mécanique de la pièce à usiner, l'extrémité libre étant définie dans la direction longitudinale/la direction d'avance du poinçon par un chanfrein côté proue (11.2, 3.52) et un chanfrein côté poupe (11.4, 3.54), entre lesquels chanfreins une surface d'enveloppe (11.3, 3.53) est formée.

8. Dispositif d'outillage d'autofrettage selon la revendication précédente du dispositif, dans lequel le passage (13.1) est disposé en alignement, en particulier coaxialement à l'axe longitudinal (M) de la pièce à usiner ; et/ou dans lequel la deuxième fixation (12) présente un évidement (12.3) qui est disposé en alignement, en particulier coaxialement à l'axe longitudinal (M) de la pièce à usiner, l'évidement (12.3) étant conçu comme évidement résistant à la haute pression pour un fluide à haute pression ou pour un mandrin (11.1, 3.51) du poinçon.

9. Dispositif d'outillage d'autofrettage selon l'une des revendications précédentes, dans lequel un/des mandrin(s) (11.1, 3.51) du poinçon (11) est/sont fixé(s) de manière démontable sur le poinçon ou est/sont monté(s) frontalement sur le poinçon ; et/ou dans lequel un/des mandrin(s) (11. 1, 3.51) du poinçon présente un chanfrein côté proue (11.2, 3.52) et un chanfrein côté poupe (11.4, 3.54), entre lesquels chanfreins est formée une surface d'enveloppe (11.3, 3.53) cylindrique ou s'élargissant coniquement vers la poupe.

10. Dispositif d'autofrettage selon l'une des revendications précédentes, dans lequel la deuxième fixation (12) est massive ; ou dans lequel la deuxième fixation présente une face inférieure (12.12) aménagée pour déposer le dispositif d'outil et pour transmettre des forces de poinçon.

11. Dispositif d'autofrettage selon l'une des revendications précédentes, dans lequel un élément intermédiaire (15) configuré géométriquement en poinçon est disposé dans la première fixation (13).

12. Dispositif d'outillage d'autofrettage selon la revendication 7, avec un dispositif de commande (20) avec une unité logique (23), aménagé pour commander un procédé selon l'une des revendications de procédé précédentes et/ou un dispositif d'outillage d'autofrettage selon l'une des revendications de dispositif précédentes, le dispositif de commande présentant au moins un entraînement (21) et un dispositif de mesure (22) comprenant au moins un capteur (22.1, 22.2, 22.3, 22.4, 22.5), l'entraînement pouvant être commandé en fonction de valeurs de mesure, en particulier de pression, de force et/ou de course, saisies par le dispositif de mesure.

13. Utilisation d'un dispositif d'outillage d'autofrettage (10) selon l'une des revendications de dispositif précédentes 7 à 11, pour l'autofrettage d'une pièce à usiner (1), en particulier d'une pièce à usiner du groupe : Corps de pompe, en particulier jusqu'à un rapport longueur/diamètre d'alésage de 15, raccords ou connecteurs de tubes, lentilles d'étanchéité, sièges de soupape, pièces tubulaires ou alésages porteurs de pression, en particulier jusqu'à un rapport longueur/diamètre d'alésage de 20 ; aussi bien de manière mécanique au moyen d'un poinçon (11) que de manière hydraulique au moyen d'un fluide haute pression (HF), à savoir simultanément de manière mécanique et hydraulique.
